# EUROPEAN PATENT SPECIFICATION

(11) **EP 2 627 193 B1**
(45) Date of publication and mention of the grant of the patent: **08.10.2014**
(21) Application number: 11773312.1
(22) Date of filing: 12.10.2011
(51) Int. Cl.: A23K 1/00, A23K 1/18, A61K 45/06

(54) **YEAST-DERIVED FEED ADDITIVE**
AUS HEFE STAMMENDER FUTTERZUSATZ
ADDITIF ALIMENTAIRE ISSU DE LEVURES

(30) Priority: 12.10.2010 GB 201017196
(43) Date of publication of application: 21.08.2013
(73) Proprietor: Borregaard AS, 1721 Sarpsborg (NO)
(72) Inventor: ROMARHEIM, Odd Helge, N-1430 Ås (NO); ØVERLAND, Margareth, N-1430 Ås (NO); MYDLAND, Liv Torunn, N-1430 Ås (NO); SKREDE, Anders, N-1430 Ås (NO); LANDSVERK, Thor, N-3677 Notodden (NO)
(74) Representative: Golding, Louise Ann
(86) International application number: PCT/GB2011/051974
(87) International publication number: WO 2012/049504

(56) References cited:
- WO-A1-2008/059225
- WO-A2-2004/043139
- US-A- 4 808 417
- US-A1- 2003 232 059

## Description

This invention relates to the use of a yeast or yeast-derived material in the treatment and/or prevention of enteritis in fish, in particular for the prevention or amelioration of soybean-induced enteritis in carnivorous fish, e.g. salmonids such as Atlantic salmon.

Feed components account for around one third of the total cost of farming fish such as salmon and trout. Fishmeal has traditionally been the major protein source in feed for carnivorous fish. However, the price of fishmeal is steadily rising and the predicted increase in aquaculture production suggests that the world's supply of fishmeal will not be sufficient to meet future demand. Alternative sources of nutrients are therefore required to replace at least part of the fish meal fraction of aquafeeds.

The attention of the aquaculture industry has recently been drawn to plant-based ingredients, in particular plant protein sources, due to their ready availability and low price. However, such materials present a number of problems which limit their widespread use in aquaculture.

The most widely available plant protein commodity, soybean meal, is marketed as a feedstuff of high nutritional value for farmed animals, including salmon and trout, and is available as full-fat soybean meal (i.e. non-reduced oil content) and defatted soybean meal (reduced oil content) forms. In Atlantic salmon and rainbow trout, however, even at low levels in the diet soybean meal causes enteritis (a damaging inflammatory reaction of the distal intestine) which is a major ethical challenge and in turn causes impaired growth and feed utilisation (Baeverfjord and Krogdahl, Journal of Fish Diseases (1996), 19: 375-387). This condition is often referred to as "soybean meal-induced enteritis" and is the main reason for low or no inclusion of soybean meal in diets for salmon and trout. The condition can also be induced by other plant materials, such as pea protein concentrate (Penn et al., XIII International Symposium on Fish Nutrition and Feeding, Florianòpolis, Brazil (2008), Book of Abstracts, p. 86).

Although the specific effects of alternative protein sources on the digestive physiology of fish have been most closely studied in the case of soybean products in feed for farmed salmonids, a recent report by the Norwegian Scientific Committee for Food Safety suggests there could be similar responses to other plant protein sources used by the fish feed industry. It is thus anticipated that other plant materials, such as pea protein concentrate, either alone or in combination, will show the same damaging effects as soybean meal when fed to fish as a replacement for fishmeal or other non enteritis-causing ingredients.

The severity of the morphological changes observed on feeding plant-derived products, such as soybean meal, to fish depends on the level of their inclusion in the diet. For example, enteritis of the distal intestine can be detected in salmon fed a diet containing as little as 10% by weight of soybean meal, with diets comprising 15% or more soybean meal (values based on total dietary protein) giving rise to severe morphological changes (Krogdahl et al., Aquaculture Nutrition (2003), 9: 361-371). Defatted soybean meal induces severe morphological changes in the distal intestine of Atlantic salmon and rainbow trout. Similar changes are observed on feeding soybean meal to other fish, such as gilthead bream, sea bream, common carp, Asian sea bass and channel catfish, although these are somewhat less severe.

The condition of "soybean meal induced enteritis" is not caused by the proteins in the feed, but rather by one or more alcohol-soluble components in the non-protein fraction. Protein concentrates and isolates produced from plant-based materials (e.g. soybean) following alcohol extraction can therefore be used without causing enteritis. Such products are, however, very expensive.

Thus, whilst alternative plant protein sources such as soybean meal represent promising candidates for partial replacement of fishmeal in aquaculture feeds, at present they cannot be used in any significant quantity in fish feeds due to the problem of enteritis. The present invention seeks to address this problem.

The present inventors have now surprisingly found that the addition of certain yeasts to the diet of fish can prevent or ameliorate plant-induced enteritis. In particular, it has been discovered that the addition of low to moderate levels of yeasts from the genus *Candida* and/or the genus *Kluyveromyces* to fish diets which include plant-based materials at levels which would otherwise cause enteritis renders such materials safe for feeding to fish.

Yeast-based ingredients are known for use in aquafeeds. For example, yeast proteins and treated yeast cells are known for their nutritional use in aquafeeds (e.g. US Patent No. 5,158,788). Document WO 2008/059225 A1 discloses a yeast derived product from Candida/Kluyveromyces as an ingredient suitable for feeding fish. However, the only possible suggested link with enteritis prevention would be with a glucan derived from Saccharomyces cerevisiae. Documents WO 2004/043139 A2, US 2003/0232059 A1 and US 4 808 417 disclose fish feeds comprising yeast extract of Candida/Kluyveromyces but not in relation with the prevention or amelioration of enteritis. However, the use of yeasts or yeast-derived materials from the genus *Candida* or the genus *Kluyveromyces* are not known for the treatment and/or prevention of enteritis in fish, e.g. soybean-induced enteritis.

Thus, in a first aspect, the present invention provides a substance derived from yeasts of the genus *Candida* and/or the genus *Kluyveromyces* for the prevention or amelioration of plant-induced enteritis in fish. Such a substance is referred to herein as a "yeast-derived material", i.e. a material containing or derived from yeasts of the genus *Candida* and/or the genus *Kluyveromyces.* In particular, the term "yeast-derived material" is used to mean intact or ruptured cells and/or a cell fraction of yeasts of the genus *Candida* and/or the genus *Kluyveromyces.* In particular, by the term "substance derived from yeasts of the genus *Candida* and/or the genus *Kluyveromyces"* is meant a nutrition-providing material comprising said yeasts, or a nutrition-providing extract or processed fraction of said yeasts. By "nutrition-providing" is meant that the material is suitable for use as an ingredient in fish feed, e.g. suitable for the partial replacement of conventional feed ingredients such as fishmeal. By "intact cells" is meant that the cell envelope (i.e. the cell wall, periplasm and plasma membrane) of the majority of the yeast cells is largely intact; preferably the cell envelope remains largely intact on at least 50%, and especially on at least 75% or at least 90%, of the yeast cells in the substance. The term "intact cells" may be used to describe cells that have been treated to weaken or partially remove the cell envelope, e.g. with lytic enzymes, but preferably refers to cells which have not been so treated. By "ruptured yeast cells" is meant a material comprising essentially all of the constituents of the intact yeast cells but wherein the cell wall of the majority of the yeast cells is largely broken (e.g. the cells have been lysed); preferably the cell wall has been broken on at least 50%, and especially on at least 75% or at least 90%, of the yeast cells in the substance. By "cell fraction" is meant an isolated part of the yeast cell. Examples of cell fractions include cell wall material and yeast extract.

In one aspect the invention provides intact or ruptured cells of a yeast from the genus *Candida* and/or the genus *Kluyveromyces* for the prevention or amelioration of plant-induced enteritis in fish. In another aspect the invention provides a cell fraction of a yeast from the genus *Candida* and/or the genus *Kluyveromyces* for the prevention or amelioration of plant-induced enteritis in fish.

Typically, the yeast-derived material will be directly incorporated into a conventional fish feed, for example a formulated fish feed, which will also comprise the plant-based material responsible for causing the enteritis. In a further aspect the invention thus provides a fish feed comprising a yeast-derived material, preferably intact or ruptured cells and/or a cell fraction of yeasts of the genus *Candida* and/or the genus *Kluyveromyces* in combination with an enteritis-causing plant material. As used herein, the term "fish feed" will generally be understood to be a complete food for fish, i.e. one which comprises all the necessary components of a fish diet.

In a related aspect the invention provides a fish feed component comprising (e.g. consisting essentially of) a yeast-derived material, preferably intact or ruptured cells and/or a cell fraction of yeasts of the genus *Candida* and/or the genus *Kluyveromyces* in combination with an enteritis-causing plant material. This feed component may be provided, for example, as an admixture of said yeast-derived material and said plant material for use as an ingredient (e.g. a protein-containing ingredient) in the preparation of a fish feed.

In a related aspect, the invention further provides a fish feed or fish feed component comprising intact or ruptured cells and/or a cell fraction of yeasts of the genus *Candida* and/or the genus *Kluyveromyces* for the prevention or amelioration of plant-induced enteritis in fish.

In a further aspect the invention provides the use of a yeast-derived material as herein described in the manufacture of an agent (e.g. in the manufacture of a fish feed or fish feed component) for the prevention or amelioration of plant-induced enteritis in fish.

In a yet further aspect the invention provides a method of preventing or ameliorating plant-induced enteritis in fish, said method comprising administering to said fish a yeast-derived material, a fish feed or a fish feed component as herein described.

By the term "plant-induced enteritis" is meant a sub-acute inflammatory condition of the distal intestinal mucosa which arises from ingestion of a plant material. More specifically, the term is intended to refer to a condition associated with one or more of the following changes to the distal intestine: (1) widening and shortening of the intestinal folds; (2) loss of the normal supranuclear vacuolization in the absorptive cells (enterocytes) of the intestinal mucosa; (3) widening of the central lamina propria within the intestinal folds, with increased amounts of connective tissue; and (4) infiltration of a mixed leucocyte population (inflammatory cells) in the lamina propria and submucosa. These morphological changes are associated with impaired functionality of the distal intestine and are characteristic of the changes induced in fish (especially in salmon and trout) by dietary soybean meal. Such changes may readily be identified by the skilled person from a histological study of distal intestinal sections.

Plant materials which may give rise to enteritis include whole, processed or extracted plant products, in particular plant protein materials. Such materials may, for example be derived from any of the following sources: soybean, sunflower, lupin, rapeseed, canola, cottonseed, peanut, peas (e.g. field peas), beans (e.g. faba bean), grain, barley, corn and maize.

Plant materials suitable for use in the invention are those which provide nutritional value in fish feeds and which are suitable for use as an ingredient in fish feed, e.g. suitable for the partial replacement of conventional feed ingredients such as fishmeal. Such products are those which give rise to enteritis in fish. Specific examples of materials which may result in enteritis or enteritis-like conditions in fish (depending on their level of inclusion in the diet) include soybean (full-fat, defatted, hulled or non-hulled), sunflower (e.g. defatted sunflower), lupin (e.g. dehulled lupin), rapeseed (e.g. defatted double-low rapeseed), whole field pea (e.g. having a crude protein content of around 24% by weight), dehulled peas (e.g. having a crude protein content of around 26% by weight), pea protein concentrate (e.g. having a crude protein content of around 35% or of around 50-60% by weight), faba beans (e.g. whole and dehulled faba beans), co-products derived from biofuel production and the brewing industry, barley protein concentrate, wheat gluten and corn gluten. These ingredients may be provided without heat treatment, or may be pre-treated by methods such as roasting, toasting, microwaving, expansion, pelleting, extrusion or other known heat treatments.

Soybean products are one example of a plant-based material known to give rise to enteritis in fish. Such products are widely available in a number of different forms and all of these are considered suitable for use in the invention. These include solvent extracted soybean meal which refers to the soybean product after the extraction of part of the oil by solvents like hexane; soybean cake derived by mechanical pressure or soybean chips; soybean meal which is ground solvent extracted soybean flake or ground soybean cake, ground soybean chips, or ground soybean flakes; soybean mill feed which is the by-product resulting from the manufacture of soybean flour or grits and is composed of soybean hulls and the offal from the tail of the mill (a typical analysis by weight is 13% crude protein, 32% crude fibre and 13% moisture); soybean mill run which is the product resulting from the manufacture of dehulled soybean meal and is composed of soybean hulls and such bean meats that adhere to the hull under normal milling operations (a typical analysis by weight is 11% crude protein, 35% crude fibre and 13% moisture); soybean hulls which is the product consisting primarily of the outer covering of the soybean; and solvent extracted soybean flakes which is the product obtained after extracting part of the oil from soybeans by the use of hexane or homologous hydrocarbon solvents.

Soybean meal is commercially available in full-fat (i.e. non-reduced oil content) and defatted (reduced oil content) forms. Soybean meal is typically defatted by solvent extraction of oils using hexane or homologous hydrocarbon solvents (e.g. n-hexane or 2,3 dimethyl pentane) which are subsequently distilled off during the toasting process. Defatted soybean meal (also known as "extracted" soybean meal) typically has the following composition (% given by weight):

| | |
|---|---|
| Protein (N x 6.25) | min. 42 % |
| Fat | min. 0.2 % |
| Crude fibre | max. 8.0 % |
| Ash | max. 7.0 % |
| Water | max. 12 % or max. 13.5% |

Total carbohydrates represent the remainder, i.e. approx. 30% (of which approximately 10% is oligosaccharides, the rest is mainly non-starch polysaccharides (e.g. galactans, arabinan)).

Analysis of soybean products may be performed according to standard testing methods as adopted by the American Oil Chemists Society (AOCS), e.g. AOCS Method Ba 2a-38 (moisture), AOCS Method Ba 4e-93 (protein), AOCS Method Ba 6-84 (crude fibre) and AOCS Method Ba 3-38 (oil). Soybean meal may be dehulled (i.e. having a lower fibre content and higher crude protein content), or not dehulled.

As used herein, the term "soybean meal" refers generally to any material derived from soybean and which is suitable for use as a fish feed ingredient (with or without further processing). Suitable soybean meal for use according to the invention, e.g. extracted and toasted soybean meal, may be obtained from Denofa AS, Norway. Preferably the soybean meal comprises an enteritis-causing alcohol-soluble fraction, i.e. the soybean meal is capable of causing enteritis in recipient fish.

Recent studies have suggested that plant saponins may be one of the responsible factors causing symptoms of enteritis in fish. Saponins are naturally occurring amphiphilic molecules consisting of a sugar moiety linked to a steroid or triterpenoid aglycone. They are widely distributed in wild plants and are also present in many cultivated crops including soybeans and lupin seeds. Typical saponin levels in defatted soybean meal are 5-7 g/kg.

The plant material or plant source for use in the invention is thus preferably one which naturally comprises a proportion of saponins. Preferably the plant material is a plant protein-containing material, e.g. full fat soybean meal, defatted soybean meal or pea protein concentrate (e.g. pea protein concentrate having a protein content of at least 20%, e.g. around 35% or around 50-60% by weight). Most preferably, the material is soybean meal. In a preferred embodiment, the plant material comprises plant proteins and saponins.

In a preferred embodiment of the invention, the enteritis is induced by one of the plant materials described herein. In an especially preferred embodiment, the plant-induced enteritis is soybean-induced enteritis.

The yeast-derived material for use according to the invention is a substance derived from or comprising yeasts of the genus *Candida* and/or the genus *Kluyveromyces.* A number of strains of *Candida* are known and used industrially, including *Candida utilis* (also known as "Torula" or "Torula yeast") which finds widespread use as a flavouring in processed foods and pet foods. C. *utilis* for use according to the present invention may be obtained from Lallemand Bio-Ingredients (Montreal, Canada), e.g. LBI Tora Line Inactive Whole Cell Yeast. Strains of *Kluyveromyces* are also known and used industrially, including *Kluyveromyces fragilis* (also known as *Kluyveromyces marxianus*) which is used as a fodder yeast in the production of feeds for livestock and domestic animals and is sold under the name VITEX™ (Lenzing AG - Biocel Paskov AS). Other sources of yeasts, e.g. Lake States™ Torula yeast, for use according to the invention include Borregaard Schweiz AG (Riedholz , Switzerland) and Agrisent De Mexico S.A De C.V. (Matamoros, Mexico). Suitable yeast strains are also available from depository institutions such as the American Type Culture Collection (ATCC). It should be noted that some species of *Kluyveromyces* are teleomorphs (the sexually reproductive stage) of *Candida* species. For example, *K. marxianus* is a teleomorph of *C. kefyr.*

Preferred strains for use according to the invention include one or more of *Candida utilis (Pichia jadinii), Kluyveromyces lactis* and *Kluyveromyces marxianus.* In a preferred embodiment of the invention, the substance for preventing or ameliorating plant-induced enteritis in fish comprises a mixture of strains. Especially preferred is a mixture of *Kluyveromyces lactis* and *Kluyveromyces marxianus* yeast strains.

When the yeast-derived material comprises intact cells, these may be active (capable of reproduction) or inactivated (incapable of reproduction). In a preferred embodiment, especially where the cells are active, the yeast-derived material is derived from a non-pathogenic yeast, especially from a yeast which is not a pathogen of an animal to which the material is to be fed (e.g. fish such as salmon) and/or which is not a pathogen of an animal which will ultimately eat the animal grown on the yeast material-containing diet (e.g. humans or livestock such as cows, sheep, pigs etc.). In a particularly preferred embodiment, the yeast-derived material comprises inactivated yeast cells, especially heat-inactivated yeast cells. Methods for the inactivation of yeasts are known in the art and include heat inactivation, e.g. at temperatures of over 55 °C in the presence or absence of inactivation-promoting agents such as potassium sorbate. The inactivated yeast cells are preferably spray dried before use.

The yeast-derived material for use in the methods herein described may be formed by growth of the yeast on or in a suitable medium or substrate. The exact nature of the growth medium used to produce the yeast-derived material is not critical and a variety of suitable substrates may be used. Molasses and natural wood sugars are examples of media known for the culturing of yeasts according to the present invention. Alternatively, yeasts for use according to the invention may be cultured using known conditions and methods, e.g. using information available from depository institutions from which the yeasts are available (e.g. the ATCC).

Typically, the yeasts produced after initial culture may comprise: a minimum of about 40% by weight crude protein (e.g. around 50-60% by weight); a maximum of about 8% by weight ash; around 15 g/kg phosphorus; from 1 to 5 g/kg magnesium; and around 5 g/kg calcium. The amino acid profile of the protein content can be expected to be nutritionally favourable with a high proportion of the more important amino acids. Typically these amino acids may be present in amounts of about 35 g/kg of lysine, about 25 g/kg of arginine, about 22 g/kg of threonine, about 8 g/kg of methionine and about 5 g/kg of cysteine. The mineral content of the product will typically comprise high amounts of phosphorus (about 1.5% by weight) and potassium (about 1.9% by weight).

Typically, the resulting yeast culture will be produced in the form of a flowable aqueous paste or slurry. Generally this will consist essentially of whole cell material, although a proportion of ruptured cell material may also be present. This culture may be used directly (i.e. without further processing) or subjected to further processing steps before use as the yeast-derived material component of the invention. Further processing steps include, in addition to centrifugation and/or filtration (e.g. ultrafiltration) processes whereby to reduce the water content prior to use. Suitable processing methods are known in the art.

Following production of the yeast culture, cells may be concentrated from the fermentation medium, for example by conventional centrifugation and/or filtration methods, e.g. microfiltration or ultrafiltration. The size exclusion used during ultrafiltration will generally be in the range of about 100 kD. However, filters having a molecular weight cut-off in the range of from 10 to 100 kD, e.g. about 20 kD, may be used. Microfiltration will generally be carried out using filters in the range of 0.2 µm to 0.4 µm.

Following centrifugation and/or ultrafiltration the yeast-derived material will be a relatively viscous protein slurry or paste. Although this may be used directly in the products and methods herein described, this will usually be further processed whereby to remove excess water from the product. The choice of any additional drying step or steps will depend on the water content of the material and the desired moisture content of the final product and could be determined by the skilled person. Typically, the product will be further processed in accordance with spray drying techniques well known in the art.

Cell fractions of the yeasts of the present invention may be produced by known means. Generally these will involve enzymatic and/or physical disruption of the yeast cells followed by one or more steps to isolate the desired cell fraction. For example, yeast cell wall fractions may be obtained by disruption of the yeast cell (e.g. using enzyme treatment and/or homogenisation) followed by centrifugal separation of the cell wall fraction from the yeast extract. The cell wall fraction may be solvent extracted, washed, dried and/or pasteurised, e.g. on a steam drum drier. Further processing steps which may be performed include enzymatic hydrolysis of the partially-purified yeast fraction, e.g. using polysaccharide lyase enzymes. The partially or fully purified fraction may also be processed by centrifugation and/or ultrafiltration as described above. The choice of process conditions (e.g. centrifugation speed and/or filter molecular weight cut-off) will depend on the fraction to be isolated and may be readily determined by the skilled person using the knowledge in the art and routine optimisation. For example, a hydrolysate may be produced by the action of one or more enzymes capable of hydrolysing (e.g. hydrolytically degrading) the cell structure and/or intracellular components of the yeast cells, preferably an enzyme or enzyme system capable of hydrolysing the nucleic acid content of the cells. Autolysates may similarly be prepared by incubation of the yeast cells under carefully controlled conditions to allow the endogenous enzymes contained within the cells, such as nucleases and proteases, to digest the components of the cell. This "self-digestion" process results in the production of various degradation products of the cell which may include peptides, amino acids, nucleotides, phospholipids, fatty acids, etc. Suitable reaction conditions for hydrolysis and autolysis of the yeast culture may be determined by one skilled in the art. For example, methods for processing yeasts are disclosed in Halasz and Lasztity, "Use of Yeast Biomass in Food Production", 1990, CRC Press.

The yeast-derived material for use in the invention may also be a permeate, i.e. the soluble fraction obtained following filtration, e.g. microfiltration or ultrafiltration. One preferred permeate is obtained by homogenisation and then filtration of the yeast cells. To improve the yield of product, the homogenisate (which may be hydrolysed or autolysed) may be washed repeatedly (e. g. up to 5 times, e. g. up to 3 times) with water followed by ultrafiltration steps. Following separation of the permeate from the solid fraction retained by the filter (herein called the retentate) the solids content of the permeate may be expected to be about 1 to 10% by weight, e.g. in the range of from 2 to 5% by weight.

The yeast-derived material herein described may also be treated to reduce the nucleic acid content of the material. General methods for the reduction in nucleic acid content of a cellular material are known in the art and include heat shock treatments. A yeast-derived material treated to reduce the nucleic acid content is referred to herein as a "nucleic acid-reduced" material. A nucleic acid-reduced material preferably comprises nucleic acids (measured as the content of DNA and RNA in the material relative to the other, non-solvent components) at a level of less than 40%, preferably less than 30% and especially preferably less than 20%, e.g. at a level of from 5 to 25%, of the content of nucleic acids in the yeast cells before nucleic acid reduction treatment.

In a preferred embodiment, the invention therefore provides a yeast-derived material or fish feed as herein defined, wherein said material is derived from a culture comprising yeasts of the genus *Candida* and/or the genus *Kluyveromyces* by one or more of the following processes: centrifugation, filtration (e.g. ultrafiltration), solvent extraction, homogenisation, hydrolysis and/or autolysis. The yeast-derived material or fish feed according to the invention is preferably dried, e.g. spray-dried. The yeast-derived material or fish feed of the invention is suitable for the prevention or amelioration of plant-induced enteritis in fish that suffer from said condition.

Typically, the yeast-derived material herein described will be fed to fish in combination with the enteritis-inducing plant material, e.g. in a formulated fish feed, and is thus preferably incorporated into a conventional feed containing a plant protein source, e.g. soybean meal. Methods for mixing feed components and providing fish feeds (e.g. in extruded or pellet form) are well known in the art. Preferred forms for fish feeds of the invention include dry pelleted, expanded and extruded forms and also include moist and semi-moist forms. Alternatively, the yeast-derived material may be fed to fish separately from the enteritis-inducing plant material as a supplement to the diet.

A process for preparing a fish feed or feed component according to the invention, e.g. as described above, will generally include the admixture of the yeast-derived material with an enteritis-causing plant material (e.g. soybean meal) and, optionally, with one or more conventional fish feed ingredients. This mixture may then be further processed. Suitable conventional ingredients and methods for preparing fish feeds and feed components are well known in the art.

Thus, viewed from a further aspect, the invention provides a process for preparing a fish feed or feed component according to the invention, which process comprises admixing a yeast-derived material as defined herein and an enteritis-causing plant material (e.g. soybean meal). In a preferred embodiment, the process comprises admixing said yeast-derived material with one or more conventional feed ingredients.

Fish which may suffer from plant-induced enteritis include both carnivorous and omnivorous fish (although the extent to which they suffer from the condition will depend on several factors, including the fish species, inclusion level and duration of feeding the plant material, etc.). The condition is typically observed within 1 day to 4 weeks of feeding the fish on plant-derived feedstuffs. Typical levels of dietary inclusion of plant-based materials which give rise to enteritis in fish are at least 5% by weight, especially at least 8% by weight and particularly at least 10% by weight (based on the total weight of the diet). Such values may also be given based on the total weight of dietary protein and may be at least 5% by weight, preferably at least 8% by weight, e.g. in the range of 8 to 40%, preferably 10 to 25%. Plant-derived feedstuffs which can induce enteritis are as herein defined, but include soybean meal (full-fat and defatted) as well as pea protein concentrates and other enteritis-causing materials.

The maximum tolerable level of plant protein in the feed according to the invention will be dependent on the species of fish and on the level of other components in the feed, especially on the level of yeast-derived material in the feed, but may readily be determined by those skilled in the art.

A conventional feed (e.g. for salmonids) may, for example, comprise (by weight): 5-50%, e.g. about 25%, fishmeal; 5-35%, e.g. about 20%, fish oil; 0-40%, e.g. about 25%, non enteritis-causing plant protein ingredients; 5-20%, e.g. about 10%, plant oils; 5-15%, e.g. about 10%, starch ingredients (e.g. wheat); and about 1% of other components (e.g. minerals, vitamins, colouring agents etc.). A preferred source of fishmeal is Norse LT-94^{®}, low-temperature dried fishmeal from Norsildmel (Bergen, Norway). A preferred source of soybean meal is extracted and toasted soybean meal from Denofa AS (Norway). A preferred source of fish oil is Silfas AS (Karmsund, Norway). Other components may be obtained from Rousselot SAS (Courbevoie, France), e.g. Rousselot® 250 PS gelatin, and from Lyckeby Culinar (Fjälkinge, Sweden), e.g. Lygel F 60 potato starch.

In one embodiment, the fish feed according to the invention may comprise (by total weight of feed): 0-25%, e.g. 5-15%, preferably about 12% or about 10% fishmeal; 1-50%, preferably 5-40%, especially 10-25%, e.g. about 15%, yeast-derived material as herein defined; and 5-50%, e.g. 10-40% or 15-30%, preferably about 20%, enteritis-causing plant material (e.g. soybean meal). In a further embodiment, the fish feed according to the invention may comprise (by total weight of feed): 0-25%, e.g. 5-15%, preferably about 10% fishmeal; 2.5-30%, preferably 5-20%, especially 10-15%, yeast-derived material as herein defined; and 5-20%, preferably 10-15%, enteritis-causing plant material (e.g. soybean meal). The fish feed of the invention will typically comprise other components for the health and nutrition of fish, such as are listed above. The quantities of these additional components may be determined by the skilled person.

Where the fish feed is intended for use in feeding salmon this may contain at least 5% by weight soybean meal, e.g. at least 10%, at least 15%, at least 20% or at least 25% by weight (based on the total weight of the diet). Where the fish feed is intended for use in feeding trout, the feed may contain at least 10% by weight soybean meal, e.g. at least 20%, at least 30% or at least 35% by weight (based on the total weight of the diet).

As will be appreciated, where other protein ingredients are present in the final feed and the yeast-derived material is not intended to provide any significant contribution to the protein content of the fish diet, it is preferable that this should be used in relatively low amounts provided that this is capable of achieving the necessary enteritis-reducing effect. On the other hand, where the yeast-derived material is intended to contribute to the protein content of the diet, this may be used in higher amounts. The actual amount of yeast-derived material which may be used will naturally be dependent on several factors, including the nature of the enteritis-causing plant material (i.e. the extent to which this is responsible for enteritis) and the amount in which this is present in the feed, the nature of the fish species, etc. Taking into account these factors, suitable amounts of the yeast-derived material may readily be determined by those skilled in the art.

In one embodiment, a fish feed of the present invention may comprise at least 0.5% by weight of yeast-derived material (as herein defined), preferably at least 0.75% by weight, e.g. at least 1, 1.2, 1.5, 2, 2.5, 3, 4 or 5% by weight. A fish feed comprising between 1.5 and 2.5% by weight of yeast-derived material is particularly preferred. Alternatively, a fish feed comprising between 1 and 50% by weight, especially between 2 and 40% by weight, e.g. between 2.5 and 30%, between 5 and 20%, e.g. about 10% or about 20%, or between 10 and 15% by weight, is also preferred. A fish feed comprising between 20 and 50% by weight, especially between 30 and 40% by weight, yeast-derived material is also preferred. In one embodiment, where the material is derived from a yeast of the genus *Candida,* the fish feed may comprise an amount of yeast-derived material of between 1 and 30% by weight, especially between 1 and 20% by weight, e.g. about 10%, or between 15 and 25% by weight, e.g. about 20%. Alternatively, where the material is derived from a yeast of the genus *Kluyveromyces,* the fish feed may comprise an amount of yeast-derived material of between 1 and 15% by weight, especially between 5 and 12%, e.g. about 10%.

In a further embodiment, the fish feed of the present invention may comprise up to 40% by weight of enteritis-causing plant material as herein defined (e.g. soybean meal), preferably up to 30% by weight. A fish feed comprising between 5 and 40% by weight plant material, especially between 10 and 35%, e.g. from 10 to 15%, by weight or 20 and 30% by weight plant material is preferred. A fish feed comprising between 2.5 and 15% by weight of yeast-derived material and between 10 and 20% by weight of enteritis-causing plant material as herein defined (e.g. soybean meal) is especially preferred.

The ratio of plant material (e.g. soybean meal) to yeast-derived material in the feeds herein described is preferably between 1:10 and 10:1, preferably between 1:8 and 8:1, between 1:5 and 5:1, between 1:3 to 3:1 or 1:2 to 2:1, especially preferably about 1:1. In an alternative embodiment, the ratio of plant material to yeast-derived material in the feeds herein described may be less than 80:1, preferably less than 40:1, e.g. less than 16:1. For example, suitable ratios may be 8:1 to 1:4, preferably 4:1 to 1:3, especially 3:2 to 2:3. In an alternative embodiment, the ratio of plant material to yeast-derived material in the feeds herein described may be 25:1 to 2:1, especially around 4:1. A preferred ratio of plant material (e.g. soybean meal) to yeast-derived material in the feeds herein described is less than 8:1, especially less than 4:1, e.g. between 4:1 and 1:1, especially about 2:1.

In the embodiment of the invention where the yeast-derived material is provided as part of a feed component, the relative amounts of yeast-derived material and enteritis-causing plant material may be the same as those set out above in respect of the above feeds, i.e. where no further yeast-derived material or plant material are provided in the final feed (and thus the ratio of said components in the final feed will be the same as that in the feed component). Alternatively, the relative amounts of yeast-derived material and plant material in the feed component may be such that incorporation of said component into the final feed results in the ratios described above. In a particularly preferred embodiment, the ratio of plant material (e.g. soybean meal) to yeast-derived material in the feed component is 20:1 to 1:4, preferably 8:1 to 1:3. Preferred feed component may comprise a ratio of enteritis-causing plant material to yeast-derived material of around 10:1 or of around 4:1, a ratio of 10:1 is particularly preferred. In an alternative embodiment, a preferred feed component comprises a ratio of enteritis-causing plant material to yeast-derived material of between 4:1 and 1:1, e.g. around 4:1, around 2:1 or around 3:2.

Particularly preferred in accordance with the invention is a feed component which comprises about 10% by weight yeast-derived material and about 90% by weight enteritis-causing plant material. Also preferred in accordance with the invention is a feed component which comprises about 20% by weight yeast-derived material and about 80% by weight enteritis-causing plant (e.g. soybean meal), or which comprises about 35% by weight yeast-derived material and about 65% by weight enteritis-causing plant material.

It is envisaged that the plant-based material herein described will be used as a replacement for fishmeal or other non enteritis-causing protein sources in fish feeds. Accordingly, the invention further provides a fish feed having a reduced content of non enteritis-causing protein sources, e.g. having a reduced fishmeal content, characterised in that some or all of the non enteritis-causing protein source (e.g. fishmeal) is replaced by an enteritis-causing plant material and a yeast-derived material as herein defined. Preferably the plant material is as hereinbefore defined and is especially preferably soybean meal. Preferably at least 50% of the non enteritis-causing protein source (e.g. fishmeal) may be replaced, e.g. at least 75%, at least 85% or at least 95%.

Whilst the methods herein described are applicable to any fish susceptible to plant-induced enteritis, the present invention is directed particularly at carnivorous fish, especially salmonids (of the family *Salmonidae*) and particularly salmon, e.g. Atlantic salmon (*Salmo salar*), chinook salmon (*Oncorhynchus tshawytscha*) or Coho salmon (*Oncorhynchus kisutch*); trout, e.g. rainbow trout (*Oncorhynchus mykiss*); char, e.g. Arctic char (*Salvelinus alpinus*); whitefish, e.g. common whitefish (*Coregonus lavaretus*); grayling, e.g. *Thymallus thymallus*; and amberjack, e.g. *Seriola dumerili.* The invention is also applicable to bream, e.g. gilthead bream (*Sparus aurata* Linn.) and sea bream; carp, e.g. common carp (*Cyprinus carpio*); cod, e.g. Atlantic cod (*Gadus morhua*); halibut, e.g. Atlantic halibut (*Hippoglossus hippoglossus*); turbot, e.g. European turbot (*Psetta maxima*); sea bass (e.g. Asian sea bass); tilapia, e.g. of the genus *Oreochromis*; and catfish, e.g. channel catfish

(*Ictalurus punctatus*) and members of the family *Pangasiidae* (e.g. *Parrgasius bocourti*).

The invention will now be described in more detail by reference to the following non-limiting Examples and Figures, in which:

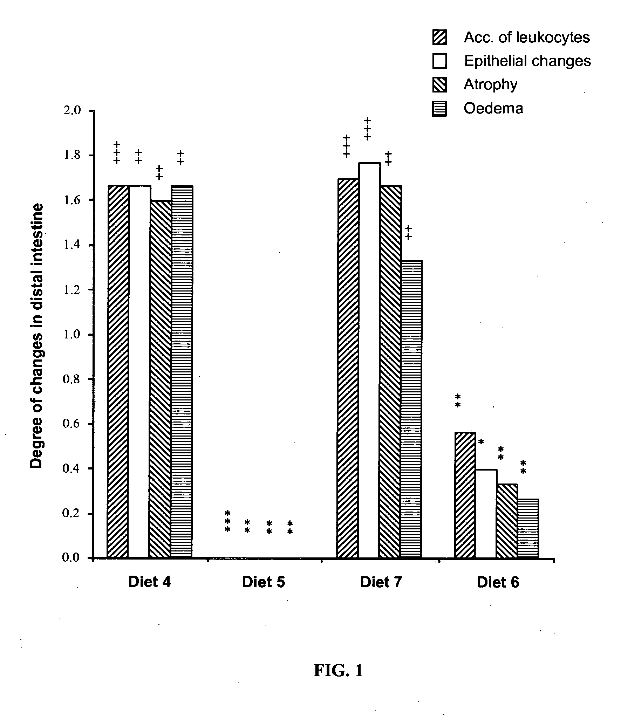

Figure 1 shows the effect of four different diets on the degree of enteritis in Atlantic Salmon.

### Example 1 - Fish feed components

Table 1 shows typical compositions of various ingredients which may be formulated to produce fish feeds:

**Table 1**

| | Fishmeal | Wheat | Soybean meal | Yeast-derived material |
|---|---|---|---|---|
| Ingredients, g kg⁻¹ | | | | |
| Crude protein | 677.50 | 134.63 | 454.56 | 566.50 |
| Dry matter | 913.24 | 861.95 | 881.36 | 935.50 |
| Ash | 127.48 | 13.18 | 58.02 | 68.75 |
| Crude lipids | 80.48 | 13.43 | 9.30 | n/a |
| Starch | 5.80 | 598.00 | 4.00 | n/a |

| | | | | |
|---|---|---|---|---|
| n/a - exact values not available | | | | |

### Example 2 - Complete fish feeds

Table 2 shows the formulation of various fish diets. Each diet contains soybean meal (SBM) at a level of 200 g/kg and yeast at a level of 100 g/kg. Diet 1 contains Torula yeast (C. *utilis*); diet 2 contains *Kluyveromyces.* Diets 1 and 2 are in accordance with the present invention. Diet 3 is a comparative diet which contains brewers yeast - Debittered, inactivated S. *cerevisiae* from Sigma-Aldrich (St. Louis, MO, USA).

**Table 2**

| Main ingredients (g/kg) | Diet 1 | Diet 2 | Diet 3 |
|---|---|---|---|
| Fishmeal | 355 | 355 | 355 |
| Soybean meal | 200 | 200 | 200 |
| *Candida utilis* | 100 | - | - |
| *Kluyveromyces* | - | 100 | |
| *Saccharomyces cerevisiae* | - | - | 100 |
| Fish oil | 140 | 140 | 140 |
| Gelatine | 100 | 100 | 100 |
| Potato starch | 100 | 100 | 100 |
| Vitamin, mineral, marker and astaxanthin mixture¹ | 5 | 5 | 5 |

| | | | |
|---|---|---|---|
| ¹ Per kg diet: vitamin A: 2500 IU; vitamin D₃: 1500 IU; vitamin E: 200 mg; vitamin K₃: 10 mg; vitamin B₁: 15 mg; vitamin B₂: 25 mg; vitamin B₃: 75 mg; vitamin B₅: 30 mg; vitamin B₆: 15 mg; vitamin B₉: 5 mg; vitamin B₁₂: 0.02 mg; vitamin C: 125 mg; biotin: 0.25 mg; Ca: 1.1g; Zn: 120 mg; Mn: 15 mg; Cu: 5 mg; Co: 1 mg; I: 3 mg; astaxanthin: 175 mg (F. Hoffmann-La Roche, Basel, Switzerland); Yttrium oxide 99,9 % purity: 100 mg (Metall Rare Earth Limited, Shenzhen, Guangdong, China). | | | |

### Example 3 - Feeding study

### Diets

Three diets with 200 g/kg SBM in combination with 100 g/kg of yeasts were prepared as defined in Table 2. The ingredients were mixed and then cold pelleted through a pasta machine (P35 SP, Italgi S.r.l., Carasco, Italy) with a 3 mm dye and rotating cutting knives at the end of the dye. The diets were kept frozen until feeding.

### Fish and rearing conditions

Atlantic salmon (*Salmo salar*) with 26g mean initial weight were randomly distributed into three tanks with 50 fish in each tank, and the diets were fed to one tank per treatment. The tanks were supplied with fresh water, and the fish were fed continuously by automatic feeders for 31 days. The mean fish weight was 33 g per fish at termination of the experiment. Oxygen levels and temperatures were recorded daily according to standard routines.

### Weighing and sampling for analysis

At termination of the experiment, five fish from each tank were picked at random for sampling of organs for histochemical evaluation. The fish were anaesthetised with MS222 and killed by a sharp blow to the head. Organs were sampled for morphological evaluation.

The intestinal tracts of the five fish from each tank were dissected for histological examination of wall tissue from distal intestine. Samples of about 5 x 5 mm were obtained from the mid part of the intestinal sections and fixed in 4% phosphate buffered formaldehyde (10% formalin). Formalin fixed tissue was routinely dehydrated in ethanol 48 hours pre-sampling, equilibrated in xylene and embedded in paraffin according to standard histological techniques. Sections of approximately 5 µm were cut and stained with haematoxylin and eosin before examination under a light microscope. Intestinal morphology was evaluated according to the following criteria described for soybean meal-induced enteritis in Atlantic salmon (Baeverfjord and Krogdahl, supra):
1) Accumulation of leukocytes (lymphocytes, granulocytes and granular cells) in the lamina propria;
2) Changes in epithelium including a) Reduced vacuolization; b) Cytoplasmic basophilia (RNA staining); and c) Reduced cellular height
3) Atrophy, i.e. reduced height of the intestinal folds; and
4) Oedema, i.e. accumulation of protein-rich fluid in the lamina propria.

Individual histological sections were evaluated and graded as follows, according to criteria (1) to (4) above:
0 = Normal intestine
1 = Slight changes associated with enteritis
2 = Moderate changes associated with enteritis
3 = Severe changes associated with enteritis.

The average score was calculated as the mean of individual scores for each fish. A score of 1 or more in any of the four criteria examined is indicative of soybean-induced enteritis in the fish from which the sample was taken.

### Results

Table 3 shows the results of a visual classification from histology of distal intestinal sections. Scores are given as average values across the five fish

**Table 3**

| Average classification of distal intestine | Accumulation of leukocytes | Changes in epithelium | Atrophy | Oedema |
|---|---|---|---|---|
| Diet 1 | 0.8 | 0.4 | 0 | 0.2 |
| Diet 2 | 0.2 | 0.2 | 0 | 0 |
| Diet 3 (comparative) | 1.6 | 1.6 | 1.6 | 0.6 |

The fish fed diets 1 and 2 show healthy intestines with histological scores in the range expected of normal fish. In contrast, the fish fed diet 3 show significant signs of enteritis.

### Conclusions

Morphological studies of the distal intestine of fish fed different yeasts show that inclusion in the diet of 10% by weight of *Candida utilis* or *Kluyveromyces* yeast cells can prevent soybean meal induced enteritis. However, the studies also show that that the inclusion in the diet of an equivalent amount of *Saccharomyces cerevisiae* yeast cells is unable to prevent soybean meal induced enteritis.

### Example 4 - Complete fish feeds

Table 4 shows the formulation of various fish diets. Diets 4 and 5 are comparative diets containing no yeast material and either soybean meal (SBM) at a level of 200 g/kg, or no SBM, respectively. Diets 6 and 7 contain SBM and yeast at a level of 200 g/kg. Diet 6 contains *Carrdida utilis.* Diet 7 is a comparative diet which contains brewers yeast (*Saccharomyces cerevisiae*).

**Table 4**

| Main ingredients (g/kg) | Diet 4 | Diet 5 | Diet 6 | Diet 7 |
|---|---|---|---|---|
| Fishmeal | 510 | 710 | 295 | 295 |
| Soybean meal | 200 | - | 200 | 200 |
| *Candida utilis* | - | - | 200 | - |
| *Saccharomyces cerevisiae* | - | - | - | 200 |
| Fish oil | 135 | 135 | 150 | 150 |
| Gelatine | 75 | 75 | 75 | 75 |
| Potato starch | 75 | 75 | 75 | 75 |
| Vitamin, mineral, marker and astaxanthin mixture¹ | 5 | 5 | 5 | 5 |

| | | | | |
|---|---|---|---|---|
| ¹ as Example 2 | | | | |

### Example 5 - Feeding study

This experiment was designed to evaluate the effectiveness of yeast meal at a higher level of inclusion in protecting Atlantic salmon against enteritis caused by plant materials in the feed. Soybean meal was used as the enteritis inducing plant material in this experiment. The effect of *S. cerevisiae* (brewers yeast) was compared to that of *Candida utilis*; positive (no yeast meal) and negative (no soybean meal) controls were also performed. The yeast containing diets were designed to contain enough SBM to induce enteritis.

### Materials and methods

Four diets (compositions shown in Table 4 above) were prepared using the method described in Example 3.

Triplicate tanks with Atlantic salmon of about 100 g initial weight were fed one of the four diets for four weeks. After completion of the trial, the intestines of the salmon were evaluated for signs of enteritis as described in Example 3.

### Results

The results of the experiment are shown in Figure 1, which clearly shows the effect of diet on the level of enteritis in the distal intestine of the Atlantic salmon. In Figure 1, the level of confidence in the results is shown by the "+" or "*" symbols above the corresponding bar. "+++" denotes a confidence level of p<0.001 relative to the corresponding value from diet 5, whereas "++" denotes a p<0.01 confidence level. "***" denotes a confidence level of p<0.001 relative to the corresponding value from diet 4, whereas "**" and "*" denotes confidence levels of p<0.01 and p<0.5, respectively.

The results of this experiment clearly show that inclusion of *Candida* yeast meal at a level of 20% by weight of feed in the diet of Atlantic salmon markedly reduced the intestinal changes characterising soy induced enteritis (SBM positive control). In the *Candida*-fed fish, all of the investigated parameters are significantly different from the positive, soybean meal control while none differ significantly from the negative, fish meal control.

In contrast, the diet based on Brewer's yeast (*Saccharomyces*) did not protect the salmon from the soy induced enteritis to any significant degree. In all observed parameters, the intestinal changes are significantly more pronounced than in the negative, fish meal based control.

There were no differences observed in growth rates or feed conversion ratios among fish fed the different diets.

## Claims

1. Yeast-derived material from
yeasts of the genus *Candida* and/or the genus *Kluyveromyces* for use in
the prevention or amelioration of plant-induced enteritis in fish.

2. The yeast-derived material for use according to claim 1, wherein the yeast is a yeast of the genus *Candida.*

3. A fish feed for use in prevention or amelioration of plant-induced enteritis in fish, said fish feed comprising yeast-derived material from yeasts of the genus *Candida* and/or the genus *Kluyveromyces.*

4. The fish feed for use according to claim 3, wherein the yeast is a yeast of the genus *Candida.*

5. The yeast-derived material for use according to claim 1 or 2 or the fish feed for use according to claim 3 or 4, wherein the plant-induced enteritis is soybean-induced enteritis.

6. A fish feed preferably in a dry pelleted, expanded or extruded form, or in a moist or semi-moist form comprising yeast-derived material from yeasts of the genus Candida and/or the genus *Kluyveromyces* in combination with an enteritis-causing plant material.

7. A fish feed having a reduced fishmeal content, **characterised in that** some or all of the fishmeal is replaced by an enteritis-causing plant material and a yeast-derived material from yeasts of the genus *Candida* and/or the genus *Kluyveromyces.*

8. The fish feed of claim 6 or 7, wherein the yeast is a yeast of the genus *Candida.*

9. A feed component comprising yeast-derived material from yeasts of the genus *Candida* and/or the genus *Kluyveromyces* in combination with an enteritis-causing plant material.

10. The feed component of claim 9, wherein the yeast is a yeast of the genus *Candida.*

11. The fish feed of claim 5 or 6 or 7, or the feed component of claim 9 or 10, wherein the enteritis-causing plant material is soybean meal.

12. The fish feed or feed component of any one of claims 5 to 11, wherein the ratio of said plant material to said yeast-derived material is less than 8:1, preferably between 4:1 and 1:1, especially about 2:1.

13. The yeast-derived material, fish feed or feed component of any one of claims 1 to 12, wherein said material comprises intact or ruptured cells and/or a cell fraction of one or more of *Candida utilis (Pichia jadinii*), *Kluyveromyces lactis* and *Kluyveromyces marxianus.*

14. The yeast-derived material, fish feed or feed component of claim 13, wherein at least 75% of the yeast cells in the yeast-derived material are intact.

15. The yeast-derived material, fish feed or feed component of any one of claims 1 to 14, which is derived by one or more of the following processes: fermentation, centrifugation, filtration, solvent extraction, homogenisation, hydrolysis, autolysis and drying.

16. The yeast-derived material, fish feed or feed component of any one of claims 1 to 15, for feeding to salmonid fish, e.g. salmon or trout.

17. A process for preparing the fish feed or feed component of any one of claims 6 to 16, which process comprises admixing a yeast-derived material from yeasts of the genus *Candida* and/or the genus *Kluyveromyces* and an enteritis-causing plant material.

## Patentansprüche

1. Aus Hefe stammendes Material von Hefen der Gattung *Candida* und/oder der Gattung *Kluyveromyces* zur Verwendung in der Verhinderung oder Linderung von pflanzeninduzierter Darmentzündung bei Fischen.

2. Aus Hefe stammendes Material zur Verwendung gemäß Anspruch 1, wobei die Hefe eine Hefe der Gattung *Candida* ist.

3. Fischfutter zur Verwendung in der Verhinderung oder Linderung pflanzeninduzierter Darmentzündung bei Fischen, wobei das Fischfutter aus Hefe stammendes Material von Hefen der Gattung Candida und/oder der Gattung *Kluyveromyces* umfasst.

4. Fischfutter zur Verwendung gemäß Anspruch 3, wobei die Hefe eine Hefe der Gattung *Candida* ist.

5. Aus Hefe stammendes Material zur Verwendung gemäß Anspruch 1 oder 2 oder das Fischfutter zur Verwendung gemäß Anspruch 3 oder 4, wobei die pflanzeninduzierte Darmentzündung eine durch Sojabohnen induzierte Darmentzündung ist.

6. Fischfutter, vorzugsweise in einer trocken pelletierten, expandierten oder extrudierten Form, oder in einer feuchten oder halbfeuchten Form, umfassend aus Hefe stammendes Material der Gattung *Candida* und/oder der Gattung *Kluyveromyces* in Kombination mit einem Darmentzündung verursachenden Pflanzenmaterial.

7. Fischfutter mit verringertem Fischmehlgehalt, **dadurch gekennzeichnet, dass** etwas oder das gesamte Fischmehl durch ein Darmentzündung verursachendes Pflanzenmaterial und ein aus Hefe stammendes Material von Hefen der Gattung *Candida* und/oder der Gattung *Kluyveromyces* ersetzt ist.

8. Fischfutter nach Anspruch 6 oder 7, wobei die Hefe eine Hefe der Gattung *Candida* ist.

9. Futterkomponente, umfassend ein aus Hefe stammendes Material von Hefen der Gattung *Candida* und/oder der Gattung *Kluyveromyces* in Kombination mit einem Darmentzündung verursachenden Pflanzenmaterial.

10. Fischfutter nach Anspruch 9, wobei die Hefe eine Hefe der Gattung *Candida* ist.

11. Fischfutter nach Anspruch 5 oder 6 oder 7 oder die Futterkomponente nach Anspruch 9 oder 10, wobei das Darmentzündung verursachende Pflanzenmaterial Sojamehl ist.

12. Fischfutter oder Futterkomponente nach einem der Ansprüche 5 bis 11, wobei das Verhältnis des Pflanzenmaterials zu dem aus Hefe stammenden Material niedriger als 8:1, vorzugsweise zwischen 4:1 und 1:1, insbesondere ungefähr 2:1 ist.

13. Aus Hefe stammendes Material, Fischfutter oder Futterkomponente nach einem der Ansprüche 1 bis 12, wobei das Material intakte oder aufgebrochene Zellen und/oder eine Zellfraktion von einer oder mehreren von *Candida utilis* (*Pichia jadinii), Kluyveromyces lactis* und *Kluyveromyces marxianus* umfasst.

14. Aus Hefe stammendes Material, Fischfutter oder Futterkomponente nach Anspruch 13, wobei mindestens 75 % der Hefezellen in dem aus Hefe stammenden Material intakt sind.

15. Aus Hefe stammendes Material, Fischfutter oder Futterkomponente nach einem der Ansprüche 1 bis 14, die durch eines oder mehrere der folgenden Verfahren erhalten werden: Fermentation, Zentrifugation, Filtration, Lösemittelextraktion, Homogenisation, Hydrolyse, Autolyse und Trocknen.

16. Aus Hefe stammendes Material, Fischfutter oder Futterkomponente nach einem der Ansprüche 1 bis 15 zum Füttern von Lachsfischen, z. B. Lachs oder Forelle.

17. Verfahren zur Herstellung des Fischfutters oder der Futterkomponente nach einem der Ansprüche 6 bis 16, wobei das Verfahren das Beimischen eines aus Hefe stammenden Materials von Hefen der Gattung Candida und/oder der Gattung *Kluyveromyces* und eines Darmentzündung verursachenden Pflanzenmaterials umfasst.

## Revendications

1. Matériau issu de levures à base de levures du genre *Candida* et/ou du genre *Kluyveromyces* pour une utilisation dans la prévention ou l'amélioration de l'entérite provoquée par des plantes chez les poissons.

2. Matériau issu de levures pour une utilisation selon la revendication 1, dans lequel la levure est une levure du genre *Candida.*

3. Aliments pour poissons pour une utilisation dans la prévention ou l'amélioration de l'entérite provoquée par des plantes chez les poissons, lesdits aliments pour poissons comprenant du matériau issu de levures à base de levures du genre Candida et/ou du genre *Kluyveromyces.*

4. Aliments pour poissons pour une utilisation selon la revendication 3, dans lesquels la levure est une levure du genre *Candida.*

5. Matériau issu de levures pour une utilisation selon la revendication 1 ou 2 ou aliments pour poissons pour une utilisation selon la revendication 3 ou 4, dans lesquels l'entérite provoquée par des plantes est l'entérite provoquée par le soja.

6. Aliments pour poissons, de préférence sous une forme sèche en granulés, expansée ou extrudée, ou sous une forme humide ou semi-humide, comprenant du matériau issu de levures à base de levures du genre *Candida* et/ou du genre *Kluyveromyces* en combinaison avec un matériau végétal provoquant une entérite.

7. Aliments pour poissons de teneur réduite en farine de poisson, **caractérisés en ce qu'**une partie ou la totalité de la farine de poisson est remplacée par un matériau végétal provoquant une entérite et un matériau issu de levures à base de levures du genre *Candida* et/ou du genre *Kluyveromyces.*

8. Aliments pour poissons selon la revendication 6 ou 7, dans lesquels la levure est une levure du genre *Candida.*

9. Composant alimentaire comprenant du matériau issu de levures à base de levures du genre Candida et/ou du genre *Kluyveromyces* en combinaison avec un matériau végétal provoquant une entérite.

10. Composant alimentaire selon la revendication 9, dans lequel la levure est une levure du genre *Candida.*

11. Aliments pour poissons selon la revendication 5 ou 6 ou 7, ou composant alimentaire selon la revendication 9 ou 10, dans lesquels le matériau végétal provoquant une entérite est la farine de soja.

12. Aliments pour poissons ou composant alimentaire selon l'une quelconque des revendications 5 à 11, dans lesquels le rapport dudit matériau végétal sur ledit matériau issu de levure est inférieur à 8/1, de préférence entre 4/1 et 1/1, spécialement environ 2/1.

13. Matériau issu de levures, aliments pour poissons ou composant alimentaire selon l'une quelconque des revendications 1 à 12, dans lesquels ledit matériau comprend des cellules intactes ou rompues et/ou une fraction cellulaire d'un ou de plusieurs de *Candida* utilis *(Pichia jadinii), Kluyveromyces lactis* et *Kluyveromyces marxianus.*

14. Matériau issu de levures, aliments pour poissons ou composant alimentaire selon la revendication 13, dans lesquels au moins 75 % des cellules de levures dans le matériau issu de levures sont intactes.

15. Matériau issu de levures, aliments pour poissons ou composant alimentaire selon l'une quelconque des revendications 1 à 14, qui est dérivé d'un ou de plusieurs des procédés suivants : une fermentation, une centrifugation, une filtration, une extraction par solvant, une homogénéisation, une hydrolyse, une autolyse et un séchage.

16. Matériau issu de levures, aliments pour poissons ou composant alimentaire selon l'une quelconque des revendications 1 à 15, pour l'alimentation des salmonidés, par exemple, le saumon ou la truite.

17. Procédé de préparation des aliments pour poissons ou du composant alimentaire selon l'une quelconque des revendications 6 à 16, lequel procédé comprend le mélange d'un matériau issu de levures à base de levures du genre *Candida* et/ou du genre *Kluyveromyces* et d'un matériau végétal provoquant une entérite.
